Europäisches Patentamt

European Patent Office

Office européen des brevets

(11) Veröffentlichungsnummer: **0 294 598 B1**

(12) **EUROPÄISCHE PATENTSCHRIFT**

(45) Veröffentlichungstag der Patentschrift: **21.10.92**

(21) Anmeldenummer: **88107364.7**

(22) Anmeldetag: **07.05.88**

(51) Int. Cl.5: **B60J 7/12**

54 **Verfahren zum Auswechseln einer flexiblen Fensterscheibe eines Klappverdecks.**

(30) Priorität: **11.06.87 DE 3719429**

(43) Veröffentlichungstag der Anmeldung:
**14.12.88 Patentblatt  88/50**

(45) Bekanntmachung des Hinweises auf die
Patenterteilung:
**21.10.92 Patentblatt  92/43**

(84) Benannte Vertragsstaaten:
**DE ES FR GB IT**

(56) Entgegenhaltungen:
**DE-B- 2 327 485**
**US-A- 1 374 249**
**US-A- 2 638 379**

(73) Patentinhaber: **Bayerische Motoren Werke Ak-**
**tiengesellschaft**
**Patentabteilung AJ-30 Postfach 40 02 40 Pe-**
**tuelring 130**
**W-8000 München 40(DE)**

(72) Erfinder: **Stahmer, Michael**
**Wilhelmstrasse 39**
**W-8000 München 40(DE)**
Erfinder: **Krieg, Heinrich**
**Kleingsenget 4**
**W-8391 Neureichenau(DE)**

Rank Xerox (UK) Business Services

**Beschreibung**

Die Erfindung betrifft ein Verfahren zum Auswechseln einer flexiblen Fensterscheibe eines Klappverdecks gemäß dem Oberbegriff des Patentanspruchs 1, wobei das Klappverdeck aus der DE-B-23 27 485 hervorgeht.

Das aus dieser Druckschrift bekannte Klappverdeck eines Cabriolets hat aus flexiblem Material bestehende Fensterscheiben, die jeweils längs einer umlaufenden Verbindungsnaht mit dem Bezug unter Bildung einer Überlappung und bei innenseitiger Anordnung eines Haltestreifens im Bereich der Überlappung durch zwei im Abstand voneinander liegende Nähte vernäht sind (Figur 3 dieser Druckschrift). Aufgrund dieser Befestigungsart der Fensterscheiben muß bei einem erforderlichen Ersatz einer Fensterscheibe der Bezug des Klappverdecks für das Einnähen einer neuen Fensterscheibe ausgebaut werden. Das Aus- und Einbauen des Bezugs eines Klappverdecks ist sehr arbeitsaufwendig und damit teuer.

Aufgabe der Erfindung ist es daher, ein Verfahren zu schaffen, durch das eine an einem Klappverdeckbezug angebrachte flexible Fensterscheibe oder dergleichen bei am Klappverdeckgestänge verbleibendem Bezug ausgewechselt werden kann.

Zur Lösung der Aufgabe sind die im kennzeichnenden Teil des Patentanspruchs 1 dargelegten Verfahrensschritte vorgesehen.

Da sich durch das erfindungsgemäße Verfahren für das Auswechseln einer flexiblen Fensterscheibe oder dergleichen der Aus- und Einbau des Bezugs erübrigt, wird dieser hierdurch, neben der Einsparung von Arbeitszeit, auch sehr geschont. Die flexible Fensterscheibe kann somit bei ausgebautem Verdeckgestänge oder auch bei unmittelbar am Fahrzeug verbleibendem Klappverdeck ausgewechselt werden. Ferner besteht auch die Möglichkeit, eine flexible Fensterscheibe nach dem erfindungsgemäßen Verfahren auch mehrmals auszuwechseln. Dieses wird zwar üblicherweise zum Auswechseln einer Fensterscheibe an einem Klappverdeck angewandt. Es ist jedoch auch denkbar, durch das erfindungsgemäße Verfahren einen aus textilem Material, Kunststoff oder dergleichen bestehenden Flächenabschnitt am Bezug des Klappverdecks rationell auszuwechseln

Eine Möglichkeit zur Durchführung des erfindungsgemäßen Verfahrens wird im folgenden anhand eines Ausführungsbeispiels für das Auswechseln einer flexiblen Heckscheibe eines Klappverdecks beschrieben Es zeigt:

Fig. 1   ein Klappverdeck mit einer heckseitigen Fensterscheibe in Rückansicht,

Fig. 2   einen Schnitt längs der Linie II-II in Figur 1 mit auszuwechselnder Fensterscheibe in größerer Darstellung,

Fig. 3   eine größere Darstellung der Verbindungsnaht von Figur 2 mit entfernter auszuwechselnder Fensterscheibe und neuer Fensterscheibe,

Fig. 4   ein abgewandeltes Ausführungsbeispiel der Erfindung.

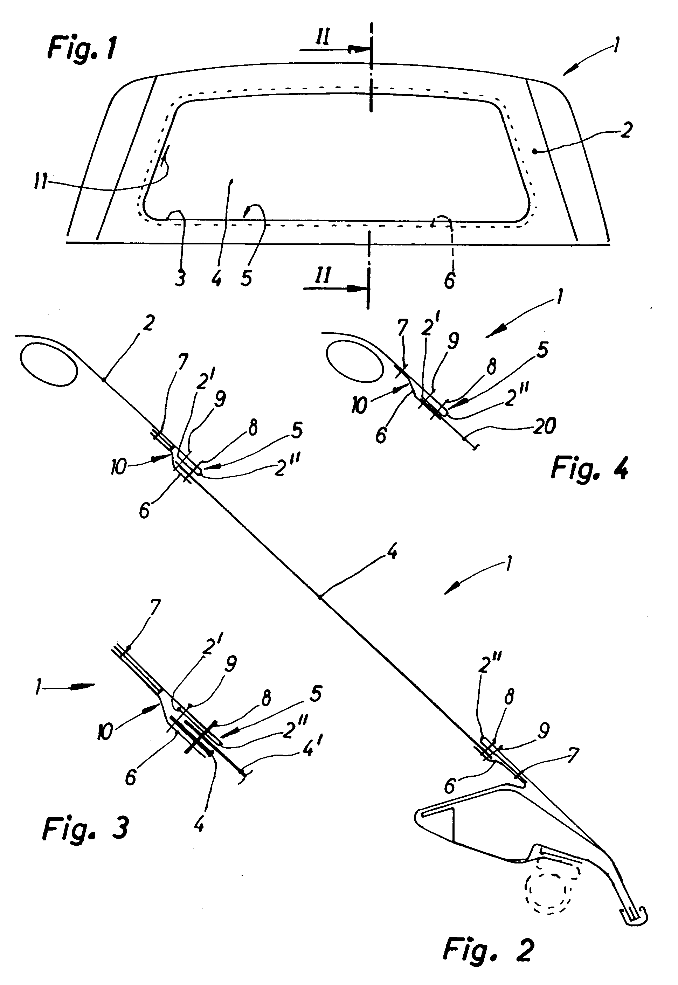

Von einem nicht dargestellten Cabriolet ist in Figur 1 ein Klappverdeck 1 in vollständig aufgeklapptem Zustand dargestellt, das mit einem textilen Bezug 2 versehen ist. Dieser hat an der Heckseite eine trapezförmige Ausnehmung 3, in die eine aus transparentem Kunststoff bestehende Fensterscheibe 4 eingesetzt ist, welche durch Vernähen längs ihres Randes mit dem Bezug 2 verbunden ist.

Wie Figur 2 zeigt, wird für eine die Fensterscheibe 4 am Bezug 2 festlegenden Verbindungsnaht 5 ein Abschnitt 2' des Bezugs 2 umgebogen und an seiner Innenseite die Fensterscheibe 4 befestigt. Diese liegt mit ihrem Umfangsrand benachbart der Innenkante des Abschnitts 2', so daß sie an der Verbindungsnaht 5 mit dem Randabschnitt des Bezugs 2 eine Überlappung bildet. Am Umfangsrand der Innenseite der Fensterscheibe 4 ist ferner ein aus textilem Material oder Kunststoff bestehender Haltestreifen 6 festgelegt, der mit etwa halber Breite die Fensterscheibe 4 überdeckt und mit seinem sich an diese anschließenden Randbereich an der Innenseite des Bezugs 2 durch eine Naht 7 festgelegt ist. Diese kann durch Nähen und/oder Hochfrequenzschweißen oder Kleben erzeugt werden. Die Fensterscheibe 4 wird am Bezug 2 und dessen Abschnitt 2' zusammen mit dem Haltestreifen 6 durch eine erste, an der Randkante 2'' des Bezugs 2 liegende Nähnaht 8 und ferner durch eine zweite, im Abstand von dieser angeordneten Nähnaht 9 befestigt; die Nähnähte 8 und 9 verlaufen dabei längs der Verbindungsnaht 5. Anstelle der zweiten Nähnaht 9 oder zusätzlich zu dieser können Haltestreifen 6, Fensterscheibe 4 und Bezug 2 durch eine Hochfrequenzschweißung oder Klebung miteinander verbunden sein, wobei eine entsprechende Schweiß- oder Klebenaht 10 im Bereich der zweiten Nähnaht 9 liegt; die erste Naht 8 wird somit ausschließlich durch Nähen erzeugt. In vorliegendem Ausführungsbeispiel ist zur Erzeugung einer zuverlässigen Wasserdichtheit anstelle der zweiten Nähnaht 9 eine Hochfrequenzschweißnaht 10 vorgesehen, wofür der Bezug 2 mit Gummi- oder Kunststofffäden versehen ist.

Falls die vorhandene Fensterscheibe 4 beispielsweise wegen Beschädigung, Verkratzung oder dergleichen gegen eine neue Fensterscheibe 4' ausgetauscht werden muß, wird dies bei vollständig oder weitgehend aufgeklapptem und am Fahrzeug verbleibendem Klappverdeck 1 wie folgt durchgeführt:

Zuerst wird bei der von der Erfindung bevorzugten Ausführungsart die auszuwechselnde Fensterscheibe 4 längs der ganzen Erstreckung der Verbindungsnaht 5 sowie nahe dieser innenseitig etwa 0,3 mm bis etwa 0,5 mm tief eingeritzt und wenigstens an einer Stelle eine nahe der Verbindungsnaht 5 liegende Durchgangsöffnung 11 von mindestens etwa 30 mm Länge angeordnet. Zusätzlich zu der Einritzung an der Fensterscheibe 4 oder anstelle von dieser ist es auch denkbar, in eine neu gefertigte Fensterscheibe 4 einen im Bereich der Verbindungsnaht 5 liegenden Draht einzubetten und diesen zum Entfernen der auszuwechselnden Fensterscheibe 4 herauszureißen, so daß er als eine Solltrenneinrichtung dient. Für das Einsetzen einer neuen Fensterscheibe 4' wird daraufhin die an der Randkante 2" des Bezugs 2 liegende erste Nähnaht 8 vorsichtig aufgetrennt - wobei darauf zu achten ist, daß die benachbarte Hochfrequenzschweißnaht 10 oder Klebenaht zur Gewährleistung der Wasserdichtheit nicht beschädigt wird - und ihre Fäden am Bezug 2, dessen Abschnitt 2' und am Haltestreifen 6 sorgfältig entfernt. Um ein Verkratzen der neuen Fensterscheibe 4' zu vermeiden, wird nun auf die auszuwechselnde Fensterscheibe 4 ein Vlies oder dergleichen Schutzfolie gelegt, anschließend auf diese die neue Fensterscheibe 4' gelegt und diese mit ihrem Randbereich unter den zuvor losgelösten und etwas hochgebogenen Randabschnitt des Bezugs 2 im Bereich der ursprünglichen ersten Nähnaht 8 geschoben, so daß die neue Fensterscheibe 4' mit ihrem Umfangsrand an die zweite Nähnaht 9 und/oder an die dort vorgesehene Schweiß- oder Klebenaht 10 angrenzt, wie Figur 3 zeigt. Damit die neue Fensterscheibe 4' beim anschließenden Befestigen nicht verschoben werden kann, werden daraufhin durch die vorhandenen Nahtlöcher im Abstand von etwa 150 bis 200 mm eine Anzahl von Fixiernadeln gesteckt, die jeweils geringfügig in die neue Fensterscheibe 4' eindringen und diese dadurch fixieren. Mittels einer Nähahle oder dergleichen Nähwerkzeug wird sodann die neue Fensterscheibe 4' unter Verwendung der an der ersten Nähnaht 8 vorhandenen Nahtlöcher eingenäht, so daß hierdurch die Wasserdichtheit absolut gewährleistet ist und auch das vorhandene Nahtbild erhalten bleibt. Damit dieses für das Nähen mit der Nähahle gut sichtbar ist, können die Nahtlöcher zuvor innen und außen mit einem weißen Stift, Kreide oder dergleichen hellen Farbe kenntlich gemacht werden. Nunmehr wird die auszuwechselnde Fensterscheibe 4 längs den Einritzungen - beginnend an der Durchgangsöffnung 11 - vollständig durchgetrennt und schließlich von der Innenseite des Klappverdecks 1 her entfernt wie Figur 3 zeigt; dabei wird auch das Vlies bzw. die Schutzfolie mit entfernt. Da wie geschildert die auszuwechselnde Fensterscheibe 4 erst nach vollständigem Einbau der neuen Fensterscheibe 4' entfernt wird, bleibt die Entfaltungsspannung im Bezug 2 des Klappverdecks 1 während des ganzen Einbaus der neuen Fensterscheibe 4' erhalten. Bei korrekter Durchführung des erfindungsgemäßen Verfahrens kann die Fensterscheibe 4' auch mehrmals ausgetauscht werden. Hierbei ist jedoch darauf zu achten, daß die jeweils neu eingesetzte Fensterscheibe durch eine zwischen der ersten und der zweiten Nähnaht 8 und 9 bzw. der Hochfrequenzschweißnaht 10 liegende Näh- und/oder Klebenaht am Bezug 2 und am Haltestreifen 6 festgelegt wird.

Wie Figur 4 zeigt, kann mittels des erfindungsgemäßen Verfahrens anstelle einer auszuwechselnden Fensterscheibe 4 am Bezug 2 - beispielsweise an dessen Seitenbereichen - auch ein aus textilem Material, Kunststoff oder dergleichen bestehender Flächenabschnitt 20 längs der Verbindungsnaht 5 wie vorstehend dargelegt ausgewechselt und befestigt werden. Hierbei wird der auszuwechselnde, alte Flächenabschnitt 20 längs der Verbindungsnaht 5 an der Innenseite des Verdecks 1 durchgeschnitten. Am Flächenabschnitt 20 kann auch eine Fensterscheibe oder dergleichen flächiges Teil angebracht sein.

## Patentansprüche

1. Verfahren zum Auswechseln einer flexiblen Fensterscheibe (4) eines Klappverdecks (1), mit dessen textilem Bezug (2) die Fensterscheibe (4) längs einer Verbindungsnaht (5) durch Nähen, Kleben oder dergleichen verbunden ist, wobei an der Verbindungsnaht (5) der Randabschnitt des Bezugs (2) die Fensterscheibe (4) überlappt und ferner ein Haltestreifen (6) vorgesehen ist, der mit einem Randbereich an der auszuwechselnden Fensterscheibe (4), mit seinem anderen Randbereich am Bezug (2) unlösbar festlegbar ist, dadurch gekennzeichnet, daß bei zumindest weitgehend aufgeklapptem Klappverdeck (1)
   - der Randabschnitt des Bezugs (2) im Bereich der Überlappung längs der Verbindungsnaht (5) gelöst,
   - eine neue Fensterscheibe (4') zwischen Bezug (2) und auszuwechselnder Fensterscheibe (4) eingesetzt,
   - eine Verbindung zwischen Bezug (2) und neuer Fensterscheibe (4') hergestellt und schließlich
   - die auszuwechselnde Fensterscheibe (4) entfernt wird.

2. Verfahren nach Anspruch 1, dadurch gekennzeichnet, daß
   - zuerst die auszuwechselnde Fensterscheibe (4) längs der Verbindungsnaht (5) sowie nahe dieser innen- und/oder außenseitig eingeritzt,

- daraufhin die an der Randkante (2") des Bezugs (2) liegende Nähnaht (8) der Verbindungsnaht (5) aufgetrennt,
- anschließend die neue Fensterscheibe (4') auf die auszuwechselnde Fensterscheibe (4) gelegt und unter den losgelösten Randabschnitt des Bezugs (2) geschoben,
- sodann die neue Fensterscheibe (4') eingenäht und
- schließlich die auszuwechselnde Fensterscheibe (4) nach vorherigem vollständigem Durchtrennen der Einritzung entfernt wird.

3. Verfahren nach Anspruch 2, dadurch gekennzeichnet, daß vor dem Auflegen der neuen Fensterscheibe (4') auf die auszuwechselnde Fensterscheibe (4) diese nahe der Verbindungsnaht (5) mit einer Durchgangsöffnung (11) versehen wird.

## Claims

1. A method of replacing a flexible window-pane (4) on a folding top (1) comprising a textile cover (2) to which the window-pane (4) is connected along a seam (5) by sewing, sticking or the like, the edge portion of the covering (2) overlapping the window-pane (4) at the connecting seam (5) and a retaining strip (6) being provided and having one edge region secured to the window-pane (4) to be replaced and the other edge region non-releasably secured to the covering (2), characterised in that when the folding top (1) is at least substantially opened
   - the edge portion of the covering (2) is loosened in the region of the overlap along the connecting seam (5),
   - a new window-pane (4') is inserted between the covering (2) and the window-pane (4) to be replaced,
   - a connection is made between the covering (2) and the new window-pane (4'), and
   - the window-pane (4) to be replaced is removed.

2. A method according to claim 1, characterised in that
   - first the window-pane (4) to be replaced is notched on the inside and/or outside along the connecting seam (5) and near it,
   - the sewn seam (8) forming part of the connecting seam (5) is cut at the edge (2") of the covering (2),
   - the new window-pane (4') is placed on the window-pane (4) to be replaced and inserted under the loosened edge portion of the covering (2),
   - the new window-pane (4') is sewn in, and
   - finally the window-pane (4) to be replaced is removed after completely cutting through the notch.

3. A method according to claim 2, characterised in that, before the new window-pane (4') is placed on the window-pane (4) to be replaced, the latter is formed with a through opening (11) near the connecting seam (5).

## Revendications

1. Procédé pour remplacer une vitre souple (4) d'une capote (1), dont le revêtement textile (2) est relié à la vitre (4) le long d'une jointure (5) réalisée par couture, collage ou moyens analogues et au niveau de la jointure (5), la zone du bord du revêtement (2) recouvrant la vitre (4), avec en outre une bande de fixation (6) qui est fixée de manière inamovible à la zone de bord sur la vitre (4) à remplacer, par sa zone de bord sur le revêtement (2), caractérisé en ce que la capote (2) étant déployée au moins dans une très large mesure,
   - on déforme le segment de bord du revêtement (2) au niveau du recouvrement le long de la jointure (5),
   - on place une nouvelle vitre (4') entre le revêtement (2) et la vitre (4) à remplacer,
   - on réalise une liaison entre le revêtement (2) et la nouvelle vitre (4') et enfin,
   - on enlève la vitre (4) à remplacer.

2. Procédé selon la revendication 1, caractérisé en ce que:
   - on entaille tout d'abord la vitre à remplacer le long de la jointure (5) et à proximité de celle-ci, sur la face intérieure et/ou extérieure,
   - puis on ouvre la couture (8) de la jointure (5) proche du bord (2") du revêtement (2),
   - puis on place la nouvelle vitre (4') sur la vitre (4) à remplacer et on la glisse sous le bord ouvert du revêtement (2),
   - puis on coud la longue vitre (4'), et
   - enfin on enlève la vitre à remplacer, après avoir coupé préalablement de manière complète les entailles.

3. Procédé selon la revendication 2, caractérisé en ce qu'avant de mettre en place la nouvelle vitre (4') sur la vitre (4) à remplacer, on réalise une ouverture traversante (11) sur celle-ci à proximité de la jointure (5).

EP 0 294 598 B1

Fig. 1

Fig. 4

Fig. 3

Fig. 2

6